# EUROPEAN PATENT SPECIFICATION

(11) **EP 3 067 186 B1**
(45) Date of publication and mention of the grant of the patent: **17.01.2018**
(21) Application number: 16159384.3
(22) Date of filing: 09.03.2016
(51) Int. Cl.: B29C 67/00, B33Y 30/00, B33Y 50/02, B33Y 10/00

(54) **APPARATUS AND METHOD FOR ADDITIVE MANUFACTURING**
VORRICHTUNG UND VERFAHREN ZUR ADDITIVEN FERTIGUNG
MACHINE ET PROCÉDÉ DE FABRICATION ADDITIVE

(30) Priority: 10.03.2015 US 201514643320
(43) Date of publication of application: 14.09.2016
(73) Proprietor: Siemens Product Lifecycle Management Software Inc., Plano, TX 75024-6612 (US)
(72) Inventor: BUI, Mai-Anh T, Huntington Beach, CA California 92648 (US); FITHIAN, Timothy R., Commerce Township, Michigan 48382 (US); MADELEY, David, Louth, Lincolnshire LN11 8QY (GB)
(74) Representative: Isarpatent

(56) References cited:
- WO-A1-2008/083358
- US-A- 5 303 141

## Description

### TECHNICAL FIELD

The present disclosure is directed, in general, to computer-aided design (CAD) systems, computer-aided manufacturing (CAM) systems, computer-aided engineering (CAE) systems, product data management (PDM) systems, product lifecycle management ("PLM") systems, and similar systems, that manage data for products and other items (collectively, product systems).

### BACKGROUND

Additive manufacturing (also referred to as 3D printing) involves processes for the production of three-dimensional (3D) articles through the incremental depositing and bonding of materials. Additive manufacturing may benefit from improvements.

### SUMMARY

Variously disclosed embodiments include methods and systems for enabling users of CAM systems and 3D printers to produce 3D articles via an additive manufacturing process. In one example, an apparatus for additive manufacturing comprises at least one processor operatively configured to generate instructions usable by a 3D printer that specify that a deposition head and/or a build plate of the 3D printer moves relative to each other to build an article on the build plate such that material is deposited from the deposition head in a spiral pattern in each of a plurality of successive layers that form at least a portion of the article.

In another example, a method for additive manufacturing comprises through operation of at least one processor, generating instructions usable by a 3D printer that specify that a deposition head and/or a build plate of the 3D printer moves relative to each other to build an article on the build plate such that material is deposited from the deposition head in a spiral pattern in each of a plurality of successive layers that form at least a portion of the article.

A further example may include, a non-transitory computer readable medium encoded with executable instructions (such as a software component on a storage device) that when executed, causes at least one processor to carry out this describe method.
US patent application US 5,303,141 discloses an apparatus and method for additive manufacturing and in particular for fabricating a three-dimensional object in accordance with a CAD-generated specification of the object. A closed-loop extrusion system includes a nozzle for extruding a material, such as a hot melt adhesive; apparatus for controllably positioning the nozzle in accordance with the specification; and a sensor for generating a feedback signal that is indicative of at least one characteristic of a most recently extruded portion of the material. Visual and non-visual feedback sensors may be employed, including optical sensors, infrared emission sensors, and proximity detection sensors. The specification of the object is converted to a bitmapped representation thereof to improve accuracy relative to vector-based representations. Methods for determining a need for supporting structures and anti-aliasing features and for integrating the structures and features into the object specification are also disclosed in US 5,303,141.
International patent application WO 2008 083358 discloses a dental blank of the present invention has at least an inner zone (or layer) of a first color and an outer zone (or layer) of a second color wherein the inner and outer zones are concentric The inner zone can be surrounded in its entirety by the outer zone such that only the outer zone is visible on all surfaces of the blank and the inner zone is not visible on any surface of the blank Alternatively, the inner zone and the outer zone can extend to a same single surface of the blank, such that only the outer zone covers all remaining surfaces The dental blank may also have an intermediate zone between the inner and outer zones, wherein the intermediate zone is surrounded in its entirety by the outer zone and/or the intermediate zone surrounds the inner zone in its entirety. The present invention is defined by an apparatus in accordance with claim 1, a method in accordance with claim 6 and by a non-transitory computer readable medium in accordance with claim 15.

### BRIEF DESCRIPTION OF THE DRAWINGS

Fig. 1 illustrates a functional block diagram of an example system that facilitates additive manufacturing.
Fig. 2 illustrates a schematic view of an example deposition head of an example 3D printer.
Fig. 3 illustrates a top plan view of an article showing a spiral pattern that a deposition axis of a deposition head moves when building layers of the article.
Fig. 4 illustrates a side view of an article showing a transitionary pattern that a deposition axis of a deposition head moves from one layer to another layer when building the article.
Fig. 5 illustrates a perspective view of an article showing spiral and transitionary patterns.
Figs. 6 and 7 illustrate views of other articles showing alternative spiral patterns.
Fig. 8 illustrates an example portion of instructions that control a 3D printer.
Fig. 9 illustrates a graphical user interface usable to configure instructions for depositing material in a spiral pattern.
Figs. 10 and 11 illustrate flow diagrams of example methodologies that facilitate additive manufacturing.
Fig. 12 illustrates a block diagram of a data processing system in which an embodiment can be implemented.

### DETAILED DESCRIPTION

Various technologies pertaining to additive manufacture will now be described with reference to the drawings, where like reference numerals represent like elements throughout. The numerous innovative teachings of the present application will be described with reference to exemplary non-limiting embodiments.

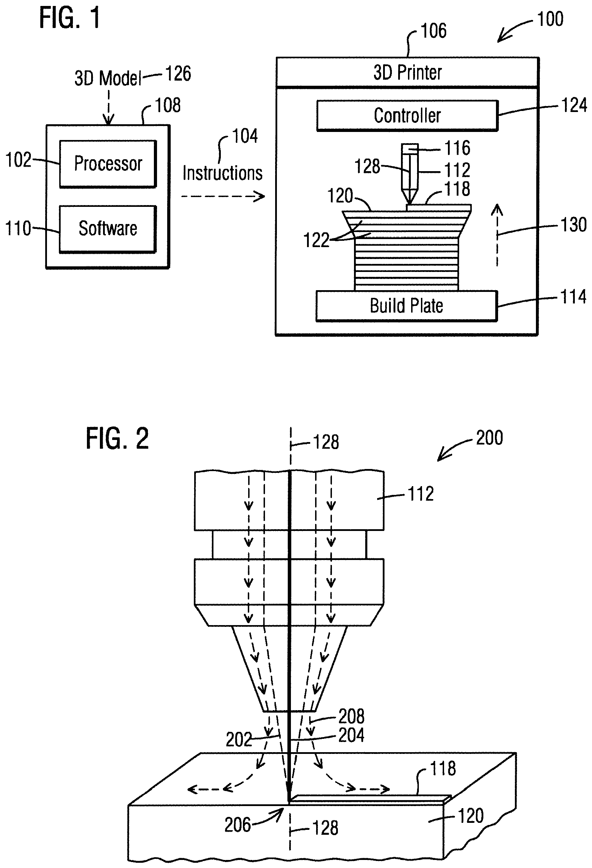

With reference to Fig. 1, an example system 100 that facilitates additive manufacturing is illustrated. Examples of additive manufacturing processes include fused deposition modeling, fused filament fabrication, robocasting, electron beam freeform fabrication, direct metal laser sintering, electron-beam melting, selective laser melting, selective heat sintering, selective laser sintering, and stereolithography. Many of these processes involve depositing and melting/softening/bonding materials in selective locations layer by layer to build up the desired 3D article. A non-exhaustive list of example materials that may be used in additive manufacturing includes metals, thermoplastics and ceramics.

Additive manufacturing processes typically employ machines specifically configured to carry out their respective processes, which are generally referred to as 3D printers or additive machines. However, it should be appreciated that some 3D printers may further be capable of machining/subtractive processes as well and correspond to hybrid additive/subtractive machines. An example of a hybrid additive/subtractive machine that may be used to carry out examples described herein includes the Sauer & DMG Mori Lasertech 65. However, it should be noted that other types of 3D printers may be operative to build an article based on the features/processes/instructions described herein. As used herein, machines capable of at least additive processes (which may or may not include subtractive processes) are referred to as 3D printers.

In an example embodiment, the system 100 includes at least one processor 102 operatively configured to generate instructions 104 usable by a 3D printer to control the operation of the 3D-printer in order to build an article via at least additive manufacturing. In an example embodiment, one or more data processing systems 108 (external to the 3D-printer) may include the at least one processor 102. For example, an external data processing system may correspond to a workstation having various software components (e.g., programs, modules, applications) 110.

The software components 110 may be operatively configured to cause the at least one processor 102 to carry out the functions and acts described herein to build the instructions 104. In an example embodiment, the instructions 104 may have a G-code format or other numerical control (NC) programming language format. Examples of G-code formats include formats confirming to standards such as RS-274-D, ISO 6983, and DIN 66025.

Example embodiments described herein may involve a 3D printer having a deposition head 112 and a build plate 114. In example embodiments, the deposition head 112 may include an integrated heat source 116 such as a laser (or electrode) that is operative to melt/soften material 118 such as powdered metal (or metal wire) that is provided from the deposition head.

The 3D printer 106 is operative to build an article 120 up from the build plate 114 via depositing layer on top of layer 122 of material 118 in a build direction 130. The deposition head 112 in this example may be operative to simultaneously output and melt/soften a continuous flow of material that bonds to the build plate and/or previously applied layers that make up the article. In this described example the material may correspond to metal (in a powder or wire form). However, it should be appreciated that in alternative embodiments, 3D printers operative to deposit other types of material such as thermoplastics may be adapted for use with the systems and processes described herein.

In an example embodiment, the 3D printer may be operative to move the deposition head horizontally (in X-Y directions) and vertically (in Z directions). In some embodiments the type of 3D printer may also be operative to move the build plate (such as by rotating the build plate with respect to one or more different axes).

Further, an example 3D printer may not just output material vertically downwardly (or perpendicular to the plane of the build plate), but may rotate the deposition head 112 relative to the Z axis in order to output material at an angle relative to vertical (or at an angle relative to perpendicular to the plane of the build plate).

Thus, the 3D printer may be operable to move the print head and/or the build plate relative to each other to deposit beads of material in patterns that build up the article or a portion of the article in layers outwardly from the build plate (such as in a build direction 130) or outwardly from a portion of the article (in a build direction that may or may not be perpendicular to the build plate 114). For example, the generated instructions 104 may specify that an article being built rotates (via rotating the build plate) so that a side wall of the article faces upwardly. In this example, the generated instructions may specify that additional portions of the article are built upwardly from the side wall of the article in a build direction that is at an angle to the build plate (such as parallel to the build plate rather than perpendicular to the build plate).

Referring back to Fig. 1, it should be noted that layers deposited based on the instructions generated by the processor may be planar. However, it should be appreciated that layers may not be planar but may be curved or have other non-planar contours.

In an example embodiment, the 3D printer may include a controller 124 that is operatively configured to actuate the hardware components (e.g., motors, electrical circuits and other components) of the 3D printer in order to selectively move the deposition head and/or the build plate in order to deposit material in the various patterns describe herein.

Such a controller 124 may include at least one processor that is operative responsive to software and/or firmware stored in the 3D printer to control the hardware components of the 3D printer (e.g., the deposition head and heat source). Such a controller may be operative to directly control the hardware of the 3D printer by reading and interpreting the generated instructions 104.

In an example embodiment, such instructions may be provided to or acquired by the controller over a network connection. In such examples, the controller 124 may include a wired or wireless network interface component operative to receive the instructions. Such instructions 104 may come directly from the data processing system 108 over the network. However, in other examples, the instructions 104 may be saved by the data processing system on an intermediate storage location (such as a file server) which is accessible to the 3D printer.

It should also be appreciated that the 3D printer may include an input device such as a card reader or a USB port that is operative to enable the controller to read the instructions stored on a portable medium such as a flash memory card or drive. In another example, the 3D printer may be connected to the data processing system 108 via a USB cable and receive the instructions 104 and other communications from the data processing system through a USB connection.

Also, in an example embodiment, the data processing system 108 may be a distributed system, in which one data processing system and/or software component generates first instructions in one type of format while a second data processing system and/or software component is operative to post-processes the first instructions into second instructions in a format such as G-code or other format that is compatible with the particular 3D printer used to generate the article.

In an example embodiment the software 110 is operate to receive a 3D model 126 of the article and generate the instructions 104 based on the 3D model 126 of the article. In an example, the software may include a CAM software component that facilitates the generation of the instructions 104 from a 3D model. Such a 3D model for example may correspond to a CAD file in a format such as STEP or IGES. In an example embodiment, the software components 110 may include a CAD/CAM/CAE software suite of applications such as NX that is available from Siemens Product Lifecycle Management Software Inc. (Plano, Texas).

In addition to generating G-Code for a 3D model, an example CAM software component may also be configured to cause the data processing system to output a visual representation of the article 120 on a display screen in operative connection with the processor based on the 3D model. In addition, the CAM component may be configured cause the data processing system to provide a graphical user interface for use with providing inputs from an input device of parameters usable to generate the instructions 104 for building the article.

Such user provided parameters may include the build direction(s) to be associated with the article (or various portions of the article), the thickness and width of each bead of deposited material, the speed that the material is deposited, the patterns that the head travels relative to the build plate to deposit material to the article, as well any other parameters that define characteristics for the operation of a 3D printer.

Referring now to Fig. 2, an example configuration 200 of a deposition head 112 is illustrated that is operative to output both depositing material 202 and heat energy 204 needed to melt/soften the material. In this example, the heat energy 204 may correspond to laser light emitted by a laser mounted in the deposition head. The material 202 provided by the deposition head may correspond to a flow of powdered metal that is directed (via the tip design of the deposition head) to flow and intersect with the laser light at the position where a deposited layer 118 of material is desired to be placed on the article 120. In addition it should be noted that the deposition head 112 may be operative to provide a surrounding jet 208 of inert shielding gas that minimizes oxidation of the material in the feed stream from the deposition head.

In this example the deposition head may be operative to deposit a bead of material that ranges from 0.1 to 1.5 mm or larger in thickness (in the build direction) and ranges from 0.1 to 4 mm or larger in width. However, it should be appreciated that different deposition heads and different additive processes may include other ranges of dimensions for the beads of material that are deposited to build up an article.

In the example shows in Fig. 2, the deposition head includes a deposition axis 128 coincident with the laser light 204 and which is parallel to the overall direction that the powdered material 202 is outputted from the deposition head. In particular, as shown in Fig. 2, it should be noted that the powdered material 202 flows in a conical pattern towards an intersection position 206 with the laser light 204. The axis of the conical pattern corresponds to the average or overall direction that powdered material is outputted from the deposition head, and corresponds to the deposition axis 128 described herein.

In an alternative embodiment, in which the material provided by the deposition is a metal wire (melted/softened via an electron beam for example), the longitudinal axis of the metal wire feeding from the deposition head corresponds to the deposition axis. Similarly for 3D printers which output extruded material, the direction the extruded material is outputted from the deposition head corresponds to the deposition axis.

It should be noted that as a deposition head and/or a build plate move relative to each other, a bead of material for a particular layer is deposited on the article in a pattern. In an example, the processor 102 may be configured to generate instructions that specify that a 3D printer fills one or more layers for one or more portions of an article with beads of material in patterns that are user selectable. One example of a user selectable pattern is a zigzag pattern in which beads of material are deposited as a series of successively adjacent rows with the deposition head traveling back and forth in straight lines until the layer is filled with deposited material.

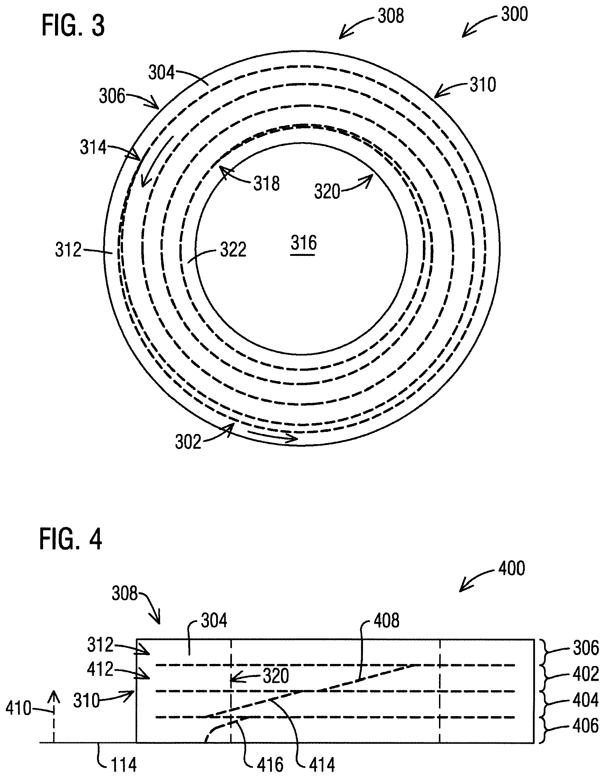

Another example of a user selectable pattern for one or more portions of an article being built by a 3D printer is a spiral pattern. Fig. 3 illustrates a top plan view 300 of such a spiral pattern 302. In this example, the broken line of the spiral pattern 302 depicts the counterclockwise track of the deposition axis of a deposition head for depositing a continuous bead 304 of material in a top most layer 306 of an article 308.

In this example, the generated instructions may specify that the deposition head may deposit a bead of material to build the layer by first traveling along and adjacent to the circumferential outer edge/wall 310 of the article. This path may deposit an initial portion 312 of the bead 304 as an outer ring of material so as to build up the outer walls of the article. In this example, it should be noted that the broken lines of the spiral pattern 302 generally correspond to the center of the bead of material being deposited at the particular location of the broken line path of the deposition axis. However, it should be noted that the generated instructions may specify that the width of the material varies for the deposited bead at various points along the spiral pattern 302 to maximize the uniformity of the thickness/height of the layer being formed.

As the initial portion 312 of the bead 304 is being completed for the layer, the instructions may specify that the deposition axis may begin to move radially inwardly (such as at position 314) so that the path of the deposition head moves in a spiral pattern that spirals/moves inwardly towards a geometric center of the article. In this example, the center of the article has a hollow core 316. Thus, the radially inward movement of the deposition axis will end (such as at a position 318) where the instructions specify that the deposition axis travels along and adjacent an inner annular wall 320 that bounds the hollow core 316 of the article so as to form a final portion 322 of the layer 306.

It should be appreciated that by depositing material in a spiral pattern, the deposition head may be operative to continuously deposit material in the continuous bead 304 for the layer 306 without stopping and without cycling off/on the output of material or the heat source. Thus the time to complete the layer 304 may be less relative to other types of patterns (e.g., a zigzag pattern) that may not be capable of being used to continuously deposit material for a corresponding geometry as this described spiral pattern.

Fig. 4 illustrates a side cross-sectional view 400 of the article 308 having four layers 306, 402, 404, 406. In example embodiments, the processor 102 may be operative to generate instructions that specify that the deposition head continuously deposits a bead of material in a transitionary pattern 408 from a position that is associated with one layer (such as layer 402) being completed to a position that is further outwardly in a build direction 410 (relative to the build plate 114) and that is associated with a subsequent layer 306. For example when the second most upper layer 402 was being completed, the generated instructions may specify that the deposition axis of the deposition head moves smoothly and continuously upwardly (in the build direction 410) so as to be in a position to deposit the next successive layer 306 on top of the previously layer 402.

In this example, the transitionary pattern 408 between the previous layer 402 and the top layer 306 may correspond to a helical path. For example, a final portion 412 of a bead of material deposited in layer 402 may have been deposited by the deposition head traveling along and adjacent the circumferential outer edge/wall 310 of the article 308. As layer 402 is completed the deposition head may move upwardly (farther away from the build plate 114) in the build direction 410 while still traveling along the circumferential edge/wall 310 of the article. With this resulting helical path of the deposition head, the deposition head smoothly and continuously begins to deposit the initial portions 312 of bead 304 as a ring along the circumferential edge/wall 310 of the article. It should be noted that the previous layers 402 and 404 may have been generated in spiral patterns as well.

Further, it should be appreciated that when several layers 306, 402, 404, 406 of an article are deposited with the described spiral patterns, the deposition head for each layer may alternate between spiraling inwardly and spiraling outwardly between radially outward and inward portions (e.g., outer and inner walls 310, 320) of the article being built. For example, layer 402 may correspond to a layer that was generated by spiraling outwardly from the inner wall 320 to the outer wall 310, while the top most layer 302 was generated by spiraling inwardly from outer wall 310 to inner wall 320

It should be noted that the generated instructions may specify transitionary paths 414, 416 between the corresponding spiral patterns for the layers 404, 406. Thus, it should appreciated that beads of deposited material in each of the four shown layers 306, 402, 404, 406 of the article 308 may correspond to one continuous bead of material 304 that was initially deposited on the build plate 114 of the 3D printer

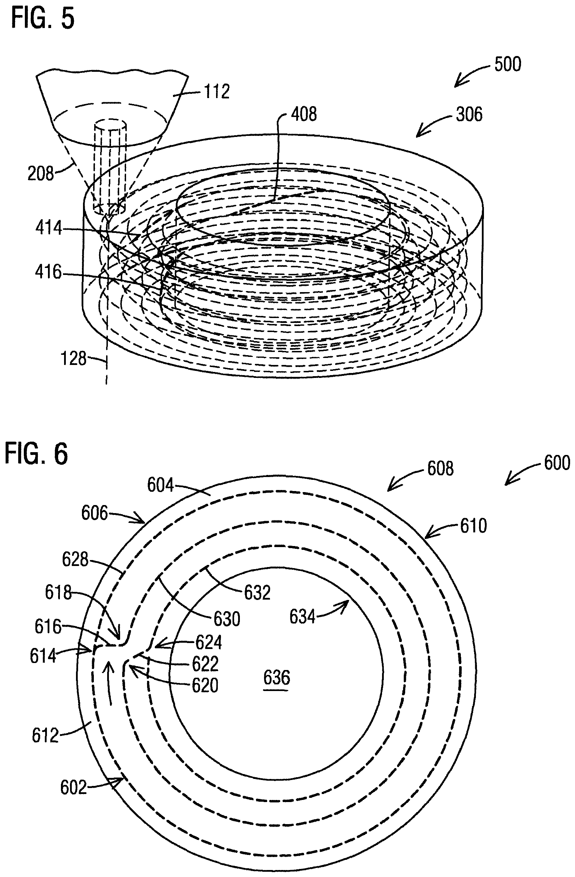

Fig. 5 illustrates a perspective interior view 500 of the article 308 showing the inward and outwardly deposited spiral patterns for each layer and the helical transitionary patterns 408, from one layer to another. By having spiral patterns for these layers connected via the described transitionary patterns 408, 414, 416 and by alternating the spiral directions from layer to layer between radially inward and radially outward directions, the generated instructions are operative to cause the deposition head to continuously deposit a continuous bead 304 of material to form all four layers without cycling off/on the output of material from the deposition head or the heat source.

It should be noted that to enhance the quality of the article, the generated instructions may cause the deposition head to vary the width of one or more beads on each layer so that the location of the deposition axis along the spiral patterns in adjacent layers are offset from each other and thus are not vertically aligned from layer to layer. For example the generated instructions may specify that the outer portion 312 of bead 304 in layer 306 in Figs. 3 and 4 may be generated via a relatively more narrow (or wider) bead of material than the final portions 412 of the bead in layer 402 immediately below it, so that subsequent inwardly portions of the deposited bead in each layer are not vertically aligned with each other.

In addition, the at least one processor may be configured to generate instructions that move the deposition head and/or build plate in other relative patterns to deposit a bead of material in layers in other types of spiral patterns. Fig. 6 illustrates a further example of a type of spiral pattern 602 in which transitions of the deposition axis inwardly or outwardly between completed rings of material for a deposited bead 604 is carried out in relatively more sharp tangent/radial paths, rather than the relatively more gradual inward transitions of the paths of the deposition axis depicted for the spiral pattern 302 in Fig 3.

For example as illustrated in the top plan view 600 of an article 608 in Fig. 6, the deposition axis may travel in a clockwise direction along and adjacent to the circumferential outer edge/wall 610 of the article 608 in a first ring shaped path 628 to deposit an initial portion 612 of the bead 604 in a top most layer 606. When the initial portion 612 of the bead 604 is completed at position 614, the deposition axis may move inwardly along a generally tangent path 616 (i.e., radially inwardly) so as to move to a further inward position 618, which is the start of a second ring shaped path 630. When the deposit of a second ring shaped portion of the bead 604 is completed, at position 620, the deposition axis may move inwardly along the generally tangent path 622 so as to move to a further inward position 624, which is the start of a third and final ring shaped path 632 along and adjacent the annular inner edge/wall 634 of a hollow central core 636 of the article in this example.

As illustrated in Fig. 6, it should be noted that tangent paths such as the tangent path 622 may follow a direction that includes both a tangent direction (e.g., radial) component as well as an annular direction component. Whereas other tangent paths such as tangent path 616 may move in a tangent (e.g., radial) direction that does not include an annular direction component.

It should be noted that as illustrated in the examples herein that a spiral pattern by which a deposition axis travels according the instructions generated by the processor, does not necessary correspond to a uniformly sooth symmetrical spiral, with each offset or loop around the center being equally spaced and uniformly shaped. Rather transitions between offsets in a spiral pattern as defined herein may have a sharply angled tangent components or other nonuniform (but still continuous) transitions between offsets in some embodiments. In addition, the shapes of the offsets/loops of a spiral pattern may not always have a generally circular form, but may have other shapes depending on the geometry of the article.

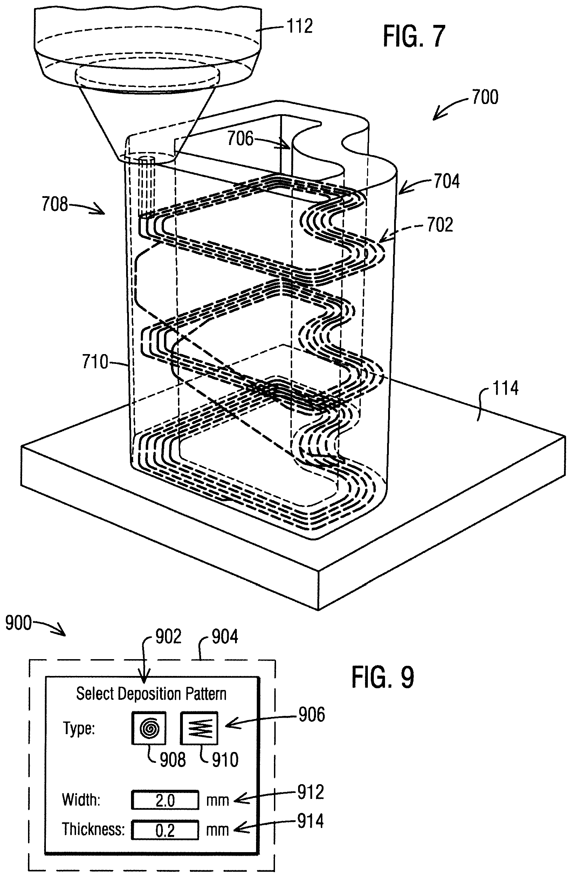

For example, it should be appreciated that the described spiral pattern may be used to build non-circular articles as well. Fig. 7 illustrates a perspective interior view 700 of an irregularly shaped article 708. In this example, the generated instructions cause the deposition head to travel in spiral pattern 702 for different layers in which the offset/loops of the spiral generally correspond to the shape of the non-circular circumferential outer wall 704 of the article as the deposition head travels in each layer between the radially outer wall 704 and radially inward wall 706 of a bore through the article. In addition, although the spiral patterns and corresponding layers are shown as being deposited on a planar surface, it should be appreciated that in alternative embodiments, the surface upon which a layer is deposited may be curved or have other non-planar contours. Further, it should be noted that the height of the layers (e.g., the material above each the spiral patterns) has been exaggerated to enhance clarity in Fig 7.

Thus, as used herein the term spiral pattern for a deposited layer corresponds to a continuous looping path (specified in the generated instructions), in which each loop around a central portion of the article is offset further inwardly (or further outwardly) of the prior loop. This may be carried out in example embodiments in order to deposit material for each layer between a radially outward portion and a radially inner portion of the article in a continuous motion without stopping the deposition head, the depositing of material, at all or as infrequently as possible given the geometry of the article.

It should also be noted that the described transitionary patterns between layers may not correspond to a smoothly curved helical path in cases where the article is not generally circular. For example, in Fig. 7 transitionary patterns 710 from one layer to a next may follow a gradually rising path along flat portions of outer and inner wall of the article, which path may produce a ramp shaped deposit of material that morphs a deposited bead from one layer to the next. As a result, a spiral pattern for each layer with the descried transitionary patterns between layers for depositing a continuous bead of material may reduce the total cycle time to build both circular and non-circular shaped portions of an article relative to other patterns (such as a zigzag pattern).

Thus with reference to Figs. 1-7, the previously described processor 102 may be operatively configured (via a CAM software component 110 executing in the processor 102) to generate the instructions 104 usable by a 3D printer 106 that specify how a deposition head 112 and/or a build plate 114 of the 3D printer moves relative to each other to build the article 120, 308, 608, 708 on the build plate 114 such that material outputted from the deposition head is deposited in successive layers 406, 404, 402, 306 in a build direction 130, 410, wherein for at least portions of each layer of at least a portion of the article, the instructions specify that the deposition head 112 continuously deposits material 118 in a spiral pattern 302, 602, 702 between radially outward portions 310, 610, 704, and radially inward portions 320, 634, 706 of the article.

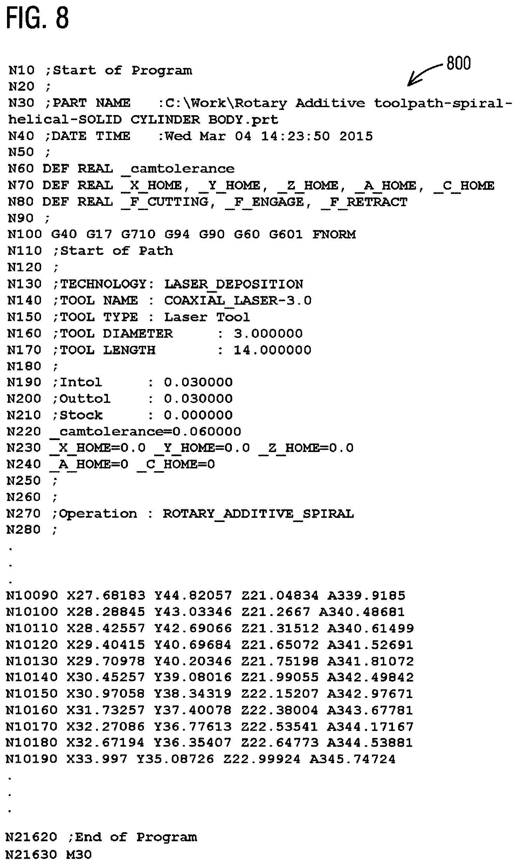

An example of a portion 800 of instructions in a G-code format that includes data operable to cause a deposition head to move the deposition axis in a spiral pattern when building a portion of an article in shown in Fig. 8.

As discussed previously, the at least one processor may be operative to provide a graphical user interface that enables a user to select between using a spiral pattern or a zigzag pattern (or some other pattern) for which the instructions specify that one or more portions of an article are additively built. Fig. 9 shows an example view 900 of a portion 902 of a graphical user interface 904 that is usable by a user to select a deposition pattern in a CAM software component for one or more portions of an article being built by a 3D printer.

In this example, portion 902 of the graphical user interface 904 may correspond to a window or other user interface control (such as a tab, ribbon, menu, or other indicia) that provides a plurality of different selectable pattern selections 906. At least one of the plurality of different pattern selections 906 includes a spiral pattern selection 908. Also, one of the plurality of different pattern selections 906 may include a zigzag pattern selection 910.

In this example, the processor associated with a data processing system may be operative to cause a display device in operative connection with the processor to output the graphical user interface 904 with graphical indicia corresponding to the different pattern selections 906. Further the processor associated with the data processing system may be in operative connection with an input device (e.g., a mouse, touch screen) through which an input from a user (e.g., mouse click) is received that is representative of a selection of one of the plurality of different pattern selections 906.

In an example embodiment, the indicia representative of the spiral pattern selection 908 may visually depict a graphical line in a spiral configuration. Also in an example embodiment, the indicia representative of the zigzag pattern selection 910 may visually depict a graphical line in a zigzag configuration.

It should also be noted that the portion 902 of the graphical user interface may include other graphical user objects through which information may be provided that specifies how the generated instructions are to control the deposition head. For example, the portion 902 may include input boxes 912 and 914 for typing or selecting a desired offset width and a thickness of the bead of material deposited by the deposition head.

In addition, it should be noted that the CAM component may enable a user to select different portions of an article to be associated with different deposition patterns when building the article with the different portions. For example, a user may specify that a solid elongated portion is constructed with a selected zigzag pattern, while a hollow tubular portion of the article is built with a selected spiral pattern.

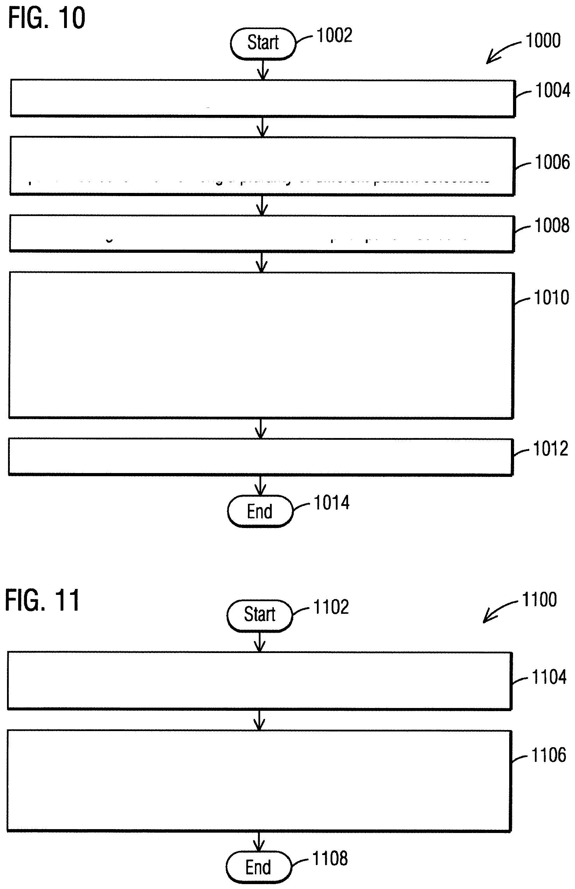

With reference now to Figs. 10 and 11, various example methodologies are illustrated and described. While the methodologies are described as being a series of acts that are performed in a sequence, it is to be understood that the methodologies may not be limited by the order of the sequence. For instance, some acts may occur in a different order than what is described herein. In addition, an act may occur concurrently with another act. Furthermore, in some instances, not all acts may be required to implement a methodology described herein.

It is important to note that while the disclosure includes a description in the context of a fully functional system and/or a series of acts, those skilled in the art will appreciate that at least portions of the mechanism of the present disclosure and/or described acts are capable of being distributed in the form of computer-executable instructions contained within non-transitory machine-usable, computer-usable, or computer-readable medium in any of a variety of forms, and that the present disclosure applies equally regardless of the particular type of instruction or signal bearing medium or storage medium utilized to actually carry out the distribution. Examples of non-transitory machine usable/readable or computer usable/readable mediums include: ROMs, EPROMs, magnetic tape, floppy disks, hard disk drives, SSDs, flash memory, CDs, DVDs, and Blu-ray disks. The computer-executable instructions may include a routine, a sub-routine, programs, applications, modules, libraries, a thread of execution, and/or the like. Still further, results of acts of the methodologies may be stored in a computer-readable medium, displayed on a display device, and/or the like.

Referring now to Fig. 10, a methodology 1000 that facilitates additive manufacturing is illustrated. The methodology 1000 begins at 1002, and at 1004 the methodology includes the act of receiving a 3D model of an article. Also at 1006, the methodology includes the act of providing a graphical user interface via which a user may select a spiral pattern selection from among a plurality of different pattern selections. In addition, at 1008 the methodology includes the act of receiving from a user a selection of the spiral pattern selection. Further, the methodology includes the act 1010 of generating (based at least in part on the 3D model and the selection of the spiral pattern selection) instructions usable by a 3D printer that specify that a deposition head and/or a build plate of the 3D printer moves relative to each other to build the article on the build plate such that material is deposited from the deposition head in a spiral pattern in each of a plurality of successive layers that form at least a portion of the article. Also, at 1012 the methodology includes the act of saving the instructions to a storage device. At 1014 the methodology may end.

As discussed previously, such acts may be carried out by at least one processor. Such a processor may be included in a data processing system for example that executes a software component operative to cause these acts to be carried out by the at least one processor.

Referring to Fig. 11, another methodology 1100 that facilitates additive manufacturing is illustrated. This methodology 1100 begins at 1102, and at 1104 the methodology includes the act of receiving instructions with a controller associated with a 3D printer, wherein the instructions correspond to the instructions generated or saved in the previously described methodology 1000 (i.e., building an article via a spiral pattern). At 1106, the methodology includes the act of through operation of the controller responsive to the instructions, causing a deposition head to output material and causing the deposition head and/or a build plate to move relative to each other responsive to the instructions so as to build the article. At 1108 the methodology may end.

As discussed previously, such acts may be carried out by at least one processor in the controller. Such a processor for example may execute a software component operative to cause these acts to be carried out by a 3D printer.

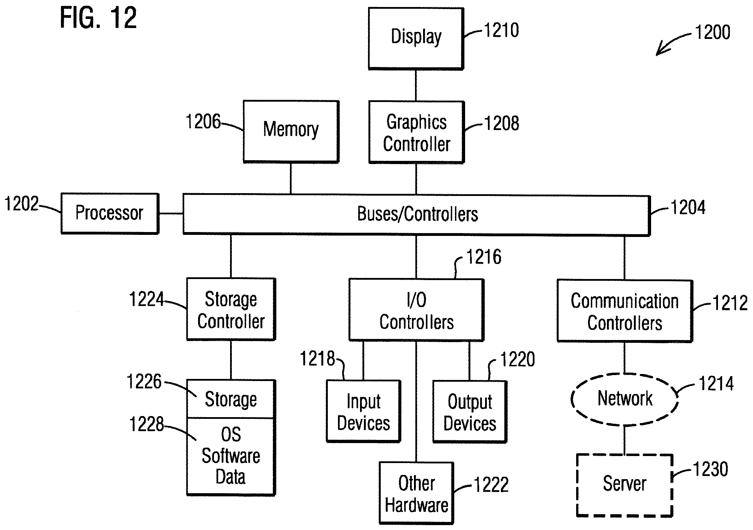

Fig. 12 illustrates a block diagram of a data processing system 1200 (also referred to as a computer system) in which an embodiment can be implemented, for example as a portion of a product system operatively configured by software or otherwise to perform the processes as described herein, and in particular as each one of a plurality of interconnected and communicating systems as described herein. The data processing system depicted includes at least one processor 1202 (e.g., a CPU) that may be connected to one or more bridges/controllers/buses 1204 (e.g., a north bridge, a south bridge). One of the buses 1204 for example may include one or more I/O buses such as a PCI Express port bus. Also connected to various buses in the depicted example may include a main memory 1206 (RAM) and a graphics controller 1208. The graphics controller 1208 may be connected to one or more displays 1210. It should also be noted that in some embodiments one or more controllers (e.g., graphics, south bridge) may be integrated with the CPU (on the same chip or die). Examples of CPU architectures include IA-32, x86-64, and ARM processor architectures.

Other peripherals connected to one or more buses may include communication controllers 1212 (Ethernet controllers, WiFi controllers, Cellular controllers) operative to connect to a local area network (LAN), Wide Area Network (WAN), a cellular network, and/or other wired or wireless networks 1214 or communication equipment.

Further components connected to various busses may include one or more I/O controllers 1216 such as USB controllers, Bluetooth controllers, and/or dedicated audio controllers (connected to speakers and/or microphones). It should also be appreciated that various peripherals may be connected to the USB controller (via various USB ports) including input devices 1218 (e.g., keyboard, mouse, touch screen, trackball, camera, microphone, scanners), output devices 1220 (e.g., printers, speakers) or any other type of device that is operative to provide inputs or receive outputs from the data processing system. Further it should be appreciated that many devices referred to as input devices or output devices may both provide inputs and receive outputs of communications with the data processing system. Further it should be appreciated that other peripheral hardware 1222 connected to the I/O controllers 1214 may include any type of device, machine, or component that is configured to communicate with a data processing system.

Additional components connected to various busses may include one or more storage controllers 1224. A storage controller may be connected to one or more storage drives, devices, and/or any associated removable media 1226, which can be any suitable machine usable or machine readable storage medium. Examples, include nonvolatile devices, volatile devices, read only devices, writable devices, ROMs, EPROMs, magnetic tape storage, floppy disk drives, hard disk drives, solid-state drives (SSDs), flash memory, optical disk drives (CDs, DVDs, Blu-ray), and other known optical, electrical, or magnetic storage devices drives and media.

Also, a data processing system in accordance with an embodiment of the present disclosure may include an operating system, software, firmware, and/or other data 1228 (that may be stored on a storage device 1226). Such an operation system may employ a command line interface (CLI) shell and/or a graphical user interface (GUI) shell. The GUI shell permits multiple display windows to be presented in the graphical user interface simultaneously, with each display window providing an interface to a different application or to a different instance of the same application. A cursor or pointer in the graphical user interface may be manipulated by a user through the pointing device. The position of the cursor/pointer may be changed and/or an event, such as clicking a mouse button, may be generated to actuate a desired response. Examples of operating systems that may be used in a data processing system may include Microsoft Windows, Linux, UNIX, iOS, and Android operating systems.

The communication controllers 1212 may be connected to the network 1214 (not a part of data processing system 1200), which can be any public or private data processing system network or combination of networks, as known to those of skill in the art, including the Internet. Data processing system 1200 can communicate over the network 1214 with one or more other data processing systems such as a server 1230 (also not part of the data processing system 1200). Thus a described data processing system may be implemented as part of a distributed system in which processors associated with several devices may be in communication by way of a network connection and may collectively perform tasks described as being performed by a single data processing system. It is to be understood that when referring to a data processing system, such a system may be implemented across several data processing systems organized in a disturbed system in communication with each other via a network.

In addition, it should be appreciated that data processing systems may be implemented as virtual machines in a virtual machine architecture or cloud environment. For example, the processor 1202 and associated components may correspond to a virtual machine executing in a virtual machine environment of one or more servers. Examples of virtual machine architectures include VMware ESCi, Microsoft Hyper-V, Xen, and KVM.

Those of ordinary skill in the art will appreciate that the hardware depicted for the data processing system may vary for particular implementations. For example the data processing system 1200 in this example may correspond to a desktop PC, workstation, and/or a server. However, it should be appreciated that alternative embodiments of a data processing system may be configured with corresponding or alternative components such as in the form of a mobile phone, tablet, controller board or any other system that is operative to process data and carry out functionality and features described herein associated with the operation of a data processing system, computer, processor, and/or a controller discussed herein. The depicted example is provided for the purpose of explanation only and is not meant to imply architectural limitations with respect to the present disclosure.

As used herein, the terms "component" and "system" are intended to encompass hardware, software, or a combination of hardware and software. Thus, for example, a system or component may be a process, a process executing on a processor, or a processor. Additionally, a component or system may be localized on a single device or distributed across several devices.

Also, as used herein a processor corresponds to any electronic device that is configured via hardware circuits, software, and/or firmware to process data. For example, processors described herein may correspond to one or more (or a combination) of a CPU, FPGA, ASIC, or any other integrated circuit (IC) or other type of circuit that is capable of processing data in a data processing system, which may have the form of a controller board, computer, server, mobile phone, and/or any other type of electronic device.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 1200 may conform to any of the various current implementations and practices known in the art.

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, act, or function is an essential element which must be included in the claim scope: the scope of patented subject matter is defined only by the allowed claims.

## Claims

1. An apparatus for additive manufacturing, the apparatus comprising:
at least one processor (102) operatively configured to generate instructions (104, 800) usable by a 3D printer (106) that specify that a deposition head (112) and/or a build plate (114) of the 3D printer moves relative to each other to build an article (120) on the build plate such that material (118) is deposited from the deposition head in a spiral pattern (302, 602, 702) in each of a plurality of successive layers (122) that form at least a portion of the article, **characterized in that** the at least one processor is operatively configured to provide a graphical user interface (904) via which a user may select a spiral pattern selection from among a plurality of different pattern selections (906) and to generate the instructions based at least in part on a user selecting the spiral pattern selection.

2. The apparatus according to claim 1, wherein the at least one processor is operatively configured: to provide the graphical user interface via which the user may select a spiral pattern selection (908) and a zigzag pattern selection (910); and to generate the instructions responsive to a user selecting the spiral pattern selection.

3. The apparatus according to claim 2, further comprising a display device (1210) in operative connection with the at least one processor, wherein the at least one processor is operatively configured to cause the display device to output indicia (902) representative of the different pattern selections, wherein the indicia representative of the spiral pattern selection visually depicts a line in a spiral configuration, wherein the indicia representative of the zigzag pattern selection visually depicts a line in a zigzag configuration.

4. The apparatus according to any one of claims 1 to 3, further comprising at least one data processing system (108, 1200) that comprises the at least one processor, wherein the at least one data processing system is external to the 3D printer and includes at least one software component (110) that executes in the at least one processor and causes the at least one processor to generate the instructions based at least in part on the 3D model (126) of the article and the selection of the spiral pattern selection.

5. The apparatus according to any one of claims 1 to 4, further comprising the 3D printer, wherein the 3D printer includes a controller (124) that is operative to selectively cause the deposition head to output material and to move and rotate the deposition head and/or the build plate relative to each other responsive to the instructions.

6. A method for additive manufacturing, the method comprising:
through operation of at least one processor (102), generating instructions (104, 800) usable by a 3D printer (106) that specify that a deposition head (112) and/or a build plate (114) of the 3D printer moves relative to each other to build an article (120) on the build plate such that material (118) is deposited from the deposition head in a spiral pattern (302, 602, 702) in each of a plurality of successive layers (122) that form at least a portion of the article,
through operation of at least one processor, providing a graphical user interface (904) via which a user may select a spiral pattern selection (906) from among a plurality of different pattern selections,
through operation of at least one processor, receiving from a user a selection of the spiral pattern selection, wherein the instructions are generated based at least in part on the user selecting the spiral pattern selection.

7. The method according to claim 6, wherein the provided graphical user interface enables a user to select a spiral pattern selection (908) and a zigzag pattern selection (910), wherein the provided graphical user interface includes an output of indicia (902) from a display device (1210), which indicia is representative of the different pattern selections, wherein the indicia representative of the spiral pattern selection visually depicts a graphical line in a spiral configuration, wherein the indicia representative of the zigzag pattern selection visually depicts a graphical line in a zigzag configuration.

8. The method according to any one of claims 6 or 7, further comprising:
prior to generating the instructions:
receiving a 3D model (126) of the article,
wherein generating the instructions is carried out through operation of the at least one processor based at least in part on the 3D model and the selected spiral pattern selection,
saving the instructions to a storage device (1226) in operative communication with the at least one processor.

9. The method according to any one of claims 6 to 8, further comprising:
receiving the instructions with at least one controller (124) associated with the 3D printer;
through operation of the controller responsive to the instructions, causing the deposition head to deposit material and causing the deposition head and/or the build plate to move relative to each other responsive to the instructions.

10. The method according to any one of the preceding method claims, wherein the instructions generated by the at least one processor specify that the spiral patterns in adjacent layers of the article are respectively deposited by the deposition head spiraling inwardly and spiraling outwardly in between radially outward portions and radially inward portions of the article.

11. The method according to any one of the preceding method claims, wherein the instructions generated by the at least one processor specify that the deposition head continuously deposits material in a transitionary pattern (408, 414, 416) from a position that is associated with a current layer to a position that is further outwardly in the build direction and that is associated with a subsequent layer, in particular wherein the instructions generated by the at least one processor specify that the transitionary pattern includes a helical path.

12. The method according to any one of the preceding method claims, wherein the instructions include G-Code instructions.

13. The apparatus according to any one of the preceding apparatus claims,
wherein the instructions generated by the at least one processor specify that the spiral patterns in adjacent layers of the article are respectively deposited by the deposition head spiraling inwardly and spiraling outwardly in between radially outward portions and radially inward portions of the article and/or
wherein the instructions include G-Code instructions.

14. The apparatus according to any one of the preceding apparatus claims, wherein the instructions generated by the at least one processor specify that the deposition head continuously deposits material in a transitionary pattern (408, 414, 416) from a position that is associated with a current layer to a position that is further outwardly in the build direction and that is associated with a subsequent layer, in particular wherein the instructions generated by the at least one processor specify that the transitionary pattern includes a helical path.

15. A non-transitory computer readable medium (1226) encoded with executable instructions (106, 1228) that when executed, cause at least one processor (102, 1202) to carry out a method for additive manufacturing according to any one of the preceding method claims.

## Patentansprüche

1. Vorrichtung zur additiven Fertigung, die Vorrichtung umfassend:
mindestens einen Prozessor (102), funktionsfähig konfiguriert zum Erzeugen von Anweisungen (104, 800), verwendbar durch einen 3D-Drucker (106), die spezifizieren, dass ein Ablagerungskopf (112) und/oder eine Aufbauplatte (114) des 3D-Druckers sich relativ zueinander bewegen, um einen Artikel (120) auf der Aufbauplatte aufzubauen, so dass Material (118) von dem Ablagerungskopf in einem Spiralmuster (302, 602, 702) in jeder einer Vielzahl von aufeinanderfolgenden Schichten (122), die mindestens einen Abschnitt des Artikels bilden, abgelagert wird,
**dadurch gekennzeichnet, dass** der mindestens eine Prozessor funktionsfähig konfiguriert ist, eine grafische Benutzerschnittstelle (904) bereitzustellen, über die ein Benutzer eine Spiralmuster-Auswahl aus einer Vielzahl verschiedener Musterauswahlen (906) auswählen kann, und die Anweisungen basierend mindestens teilweise auf einem Benutzer, der die Spiralmuster-Auswahl auswählt, auszuwählen.

2. Vorrichtung nach Anspruch 1, wobei der mindestens eine Prozessor funktionsfähig konfiguriert ist: zum Bereitstellen der grafischen Benutzerschnittstelle, über die der Benutzer eine Spiralmuster-Auswahl (908) und eine Zickzackmuster-Auswahl (910) auswählen kann; und zum Erzeugen der Anweisungen als Reaktion auf einen Benutzer, der die Spiralmuster-Auswahl auswählt.

3. Vorrichtung nach Anspruch 2, ferner umfassend eine Anzeigevorrichtung (1210) in funktionsfähiger Verbindung mit dem mindestens einen Prozessor, wobei der mindestens eine Prozessor funktionsfähig konfiguriert ist, zu bewirken, dass die Anzeigevorrichtung Angaben (902) ausgibt, die die verschiedenen Musterauswahlen repräsentieren, wobei die Angaben, die die Spiralmuster-Auswahl repräsentieren, eine Linie in einer Spiralkonfiguration visuell darstellen, wobei die Angaben, die die Zickzackmuster-Auswahl repräsentieren, eine Linie in einer Zickzackkonfiguration visuell darstellen.

4. Vorrichtung nach einem der Ansprüche 1 bis 3, ferner umfassend mindestens ein Datenverarbeitungssystem (108, 1200), das den mindestens einen Prozessor umfasst, wobei das mindestens eine Datenverarbeitungssystem zu dem 3D-Drucker extern ist und mindestens eine Software-Komponente (110) enthält, die in dem mindestens einen Prozessor ausgeführt wird und bewirkt, dass der mindestens eine Prozessor die Anweisungen mindestens teilweise basierend auf dem 3D-Modell (126) des Artikels und der Auswahl der Spiralmuster-Auswahl erzeugt.

5. Vorrichtung nach einem der Ansprüche 1 bis 4, ferner umfassend den 3D-Drucker, wobei der 3D-Drucker eine Steuerung (124) enthält, die funktionsfähig ist, selektiv zu bewirken, dass der Ablagerungskopf Material ausgibt, und dass der Ablagerungskopf und/oder die Aufbauplatte sich relativ zueinander als Reaktion auf die Anweisungen bewegen und drehen.

6. Verfahren für additive Fertigung, das Verfahren umfassend:
durch Operieren mindestens eines Prozessors (102) Erzeugen von Anweisungen (104, 800), die durch einen 3D-Drucker (106) verwendbar sind, die spezifizieren, dass ein Ablagerungskopf (112) und/oder eine Aufbauplatte (114) des 3D-Druckers sich relativ zueinander bewegen, um einen Artikel (120) auf der Aufbauplatte aufzubauen, so dass Material (118) von dem Ablagerungskopf in einem Spiralmuster (302, 602, 702) in jeder einer Vielzahl von aufeinanderfolgenden Schichten (122), die mindestens einen Abschnitt des Artikels bilden, abgelagert wird,
durch Operieren mindestens eines Prozessors Bereitstellen einer grafischen Benutzerschnittstelle (904), über die ein Benutzer eine Spiralmuster-Auswahl (906) aus einer Vielzahl verschiedener Musterauswahlen auswählen kann,
durch Operieren mindestens eines Prozessors Empfangen einer Auswahl der Spiralmuster-Auswahl von einem Benutzer, wobei die Anweisungen mindestens teilweise darauf basierend, dass der Benutzer die Spiralmuster-Auswahl auswählt, erzeugt werden.

7. Verfahren nach Anspruch 6, wobei die bereitgestellte grafische Benutzerschnittstelle einen Benutzer in die Lage versetzt, eine Spiralmuster-Auswahl (908) und eine Zickzackmuster-Auswahl (910) auszuwählen, wobei die bereitgestellte grafische Benutzerschnittstelle eine Ausgabe von Angaben (902) von einer Anzeigevorrichtung (1210) enthält, wobei die Angaben die verschiedenen Musterauswahlen repräsentieren, wobei die Angaben, die die Spiralmuster-Auswahl repräsentieren, eine grafische Linie in einer Spiralkonfiguration visuell darstellen, wobei die Angaben, die die Zickzackmuster-Auswahl repräsentieren, eine grafische Linie in einer Zickzackkonfiguration visuell darstellen.

8. Verfahren nach einem der Ansprüche 6 oder 7, ferner umfassend:
vor dem Erzeugen der Anweisungen:
Empfangen eines 3D-Modells (126) des Artikels,
wobei Erzeugen der Anweisungen durch Operieren des mindestens einen Prozessors basierend mindestens teilweise auf dem 3D-Modell und der ausgewählten Spiralmuster-Auswahl ausgeführt wird,
Speichern der Anweisungen in einer Speichervorrichtung (1226) in funktionsfähiger Kommunikation mit dem mindestens einen Prozessor.

9. Verfahren nach einem der Ansprüche 6 bis 8, ferner umfassend:
Empfangen der Anweisungen mit der mindestens einen mit dem 3D-Drucker assoziierten Steuerung (124);
durch Operieren der Steuerung als Reaktion auf die Anweisungen Bewirken, dass der Ablagerungskopf Material ablagert, und Bewirken, dass der Ablagerungskopf und/oder die Aufbauplatte sich relativ zueinander als Reaktion auf die Anweisungen bewegen.

10. Verfahren nach einem der vorstehenden Verfahrensansprüche, wobei die durch den mindestens einen Prozessor erzeugten Anweisungen spezifizieren, dass die Spiralmuster in aneinander angrenzenden Schichten des Artikels jeweils durch Spiralbewegung des Ablagerungskopfes nach innen und Spiralbewegung nach außen zwischen radialen Auswärtsabschnitten und radialen Einwärtsabschnitten des Artikels abgelagert werden.

11. Verfahren nach einem der vorstehenden Verfahrensansprüche, wobei die durch den mindestens einen Prozessor erzeugten Anweisungen spezifizieren, dass der Ablagerungskopf Material in einem Übergangsmuster (408, 414, 416) von einer Position, die mit einer gegenwärtigen Schicht assoziiert ist, bis zu einer Position, die in der Aufbaurichtung weiter außen ist und die mit einer anschließenden Schicht assoziiert ist, kontinuierlich ablagert, wobei die durch den mindestens einen Prozessor erzeugten Anweisungen insbesondere spezifizieren, dass das Übergangsmuster einen helixförmigen Weg enthält.

12. Verfahren nach einem der vorstehenden Verfahrensansprüche, wobei die Anweisungen G-Code-Anweisungen enthalten.

13. Vorrichtung nach einem der vorstehenden Vorrichtungsansprüche,
wobei die durch den mindestens einen Prozessor erzeugten Anweisungen spezifizieren, dass die Spiralmuster in aneinander angrenzenden Schichten des Artikels jeweils durch Spiralbewegung des Ablagerungskopfes nach innen und Spiralbewegung nach außen zwischen radialen Auswärtsabschnitten und radialen Einwärtsabschnitten des Artikels abgelagert werden, und/oder
wobei die Anweisungen G-Code-Anweisungen enthalten.

14. Vorrichtung nach einem der vorstehenden Vorrichtungsansprüche, wobei die durch den mindestens einen Prozessor erzeugten Anweisungen spezifizieren, dass der Ablagerungskopf Material in einem Übergangsmuster (408, 414, 416) von einer Position, die mit einer gegenwärtigen Schicht assoziiert ist, bis zu einer Position, die in der Aufbaurichtung weiter außen ist und die mit einer anschließenden Schicht assoziiert ist, kontinuierlich ablagert, wobei die durch den mindestens einen Prozessor erzeugten Anweisungen insbesondere spezifizieren, dass das Übergangsmuster einen helixförmigen Weg enthält.

15. Nichtflüchtiges computerlesbares Medium (1226), codiert mit ausführbaren Anweisungen (106, 1228), die, wenn sie ausgeführt werden, bewirken, dass mindestens ein Prozessor (102, 1202) ein Verfahren zur additiven Fertigung nach einem der vorstehenden Verfahrensansprüche ausführt.

## Revendications

1. Appareil de fabrication additive comprenant :
au moins un processeur (102) configuré fonctionnellement pour générer des instructions (104, 800) utilisables par une imprimante 3D (106) qui spécifient qu'une tête de dépôt (112) et/ou une plaque de construction (114) de l'imprimante 3D se déplacent l'une par rapport à l'autre pour construire un article (120) sur la plaque de construction de telle sorte qu'un matériau (118) soit déposé par la tête de dépôt dans une configuration spiralée (302, 602, 702) dans chacune d'une pluralité de couches successives (122) qui forment au moins une partie de l'article,
**caractérisé en ce que** l'au moins un processeur est configuré fonctionnellement pour fournir une interface utilisateur graphique (904) par l'intermédiaire de laquelle un utilisateur peut sélectionner une sélection de configuration spiralée parmi une pluralité de différentes sélections de configuration (906) et générer les instructions en fonction au moins en partie de la sélection par l'utilisateur de la sélection de configuration spiralée.

2. Appareil selon la revendication 1, dans lequel l'au moins un processeur est configuré fonctionnellement : pour fournir l'interface utilisateur graphique par l'intermédiaire de laquelle l'utilisateur peut sélectionner une sélection de configuration spiralée (908) et une sélection de configuration en zigzag (910) ; et générer les instructions en réponse à une sléection par un utilisateur de la sélection de configuration spiralée.

3. Appareil selon la revendication 2, comprenant en outre un dispositif d'affichage (1210) en connexion fonctionnelle avec l'au moins un processeur, dans lequel l'au moins un processeur est configuré fonctionnellement pour amener le dispositif d'affichage à produire des repères (902) représentatifs des différentes sélections de configuration, dans lequel les repères représentatifs de la sélection de configuration spiralée décrivent visuellement une ligne dans une configuration spiralée, dans lequel les repères représentatifs de la sélection de configuration en zigzag décrivent visuellement une ligne dans une configuration en zigzag.

4. Appareil selon l'une quelconque des revendications 1 à 3, comprenant en outre au moins un système de traitement de données (108, 1200) qui comprend l'au moins un processeur, dans lequel l'au moins un système de traitement de données est externe à l'imprimante 3D et comporte au moins un composant logiciel (110) qui est exécuté dans l'au moins un processeur et amène l'au moins un processeur à générer les instructions en fonction au moins en partie du modèle 3D (126) de l'article et de la sélection de la sélection de configuration spiralée.

5. Appareil selon l'une quelconque des revendications 1 à 4, comprenant en outre l'imprimante 3D, dans lequel l'imprimante 3D comporte un contrôleur (124) ayant pour fonction d'amener sélectivement la tête de dépôt à produire en sortie un matériau et de déplacer et faire tourner la tête de dépôt et/ou la plaque de construction l'une par rapport à l'autre en réponse aux instructions.

6. Procédé de fabrication additive comprenant :
par le biais du fonctionnement d'au moins un processeur (102), la génération d'instructions (104, 800) pouvant être utilisées par une imprimante 3D (106) qui spécifient qu'une tête de dépôt (112) et/ou une plaque de construction (114) de l'imprimante 3D se déplacent l'une par rapport à l'autre pour construire un article (120) sur la plaque de construction de telle sorte qu'un matériau (118) soit déposé par la tête de dépôt dans une configuration spiralée (302, 602, 702) dans chacune d'une pluralité de couches successives (122) qui forment au moins une partie de l'article,
par le biais du fonctionnement de l'au moins un processeur, la fourniture d'une interface utilisateur graphique (904) par l'intermédiaire de laquelle un utilisateur peut sélectionner une sélection de configuration spiralée (906) parmi une pluralité de différentes sélections de configuration,
par le biais du fonctionnement de l'au moins un processeur, la réception depuis un utilisateur d'une sélection de la sélection de configuration spiralée, dans lequel les instructions sont générées en fonction au moins en partie de la sélection par l'utilisateur de la sélection de configuration spiralée.

7. Procédé selon la revendication 6, dans lequel l'interface utilisateur graphique fournie permet à un utilisateur de sélectionner une sélection de configuration spiralée (908) et une sélection de configuration en zigzag (910), dans lequel l'interface utilisateur graphique fournie comporte une sortie de repères (902) depuis un dispositif d'affichage (1210), lesquels repères sont représentatifs des différentes sélections de configuration, dans lequel les repères représentatifs de la sélection de configuration spiralée décrivent visuellement une ligne dans une configuration spiralée, dans lequel les repères représentatifs de la sélection de configuration en zigzag décrivent visuellement une ligne dans une configuration en zigzag.

8. Procédé selon l'une quelconque des revendications 6 ou 7, comprenant en outre :
avant la génération des instructions :
la réception d'un modèle 3D (126) de l'article,
dans lequel la génération des instructions a lieu par le biais du fonctionnement de l'au moins un processeur en fonction au moins en partie du modèle 3D et de la sélection de configuration spiralée sélectionnée,
la sauvegarde des instructions dans un dispositif de mémorisation (1226) en communication opérationnelle avec l'au moins un processeur.

9. Procédé selon l'une quelconque des revendications 6 à 8, comprenant en outre :
la réception des instructions avec au moins un contrôleur (124) associé à l'imprimante 3D ;
par le biais du fonctionnement du contrôleur en réponse aux instructions, l'incitation de la tête de dépôt à déposer un matériau et l'incitation de la tête de dépôt et/ou de la plaque de construction à se déplacer l'une par rapport à l'autre en réponse aux instructions.

10. Procédé selon l'une quelconque des revendications de procédé précédentes, dans lequel les instructions générées par l'au moins un processeur spécifient que les configurations spiralées dans des couches adjacentes de l'article sont déposées respectivement par la tête de dépôt qui se déplace en spirale vers l'intérieur et en spirale vers l'extérieur entre des parties radialement vers l'extérieur et des parties radialement vers l'intérieur de l'article.

11. Procédé selon l'une quelconque des revendications de procédé précédentes, dans lequel les instructions générées par l'au moins un processeur spécifient que la tête de dépôt dépose continûment un matériau selon une configuration transitoire (408, 414, 416) d'une position associée à une couche actuelle à une position située davantage vers l'extérieur dans le sens de la construction et qui est associée à une couche suivante, en particulier dans lequel les instructions générées par l'au moins un processeur spécifient que la configuration transitoire comporte une trajectoire hélicoïdale.

12. Procédé selon l'une quelconque des revendications de procédé précédentes, dans lequel les intructions comportent des instructions de code G.

13. Appareil selon l'une quelconque des revendications d'appareil précédentes,
dans lequel les instructions générées par l'au moins un processeur spécifient que les configurations spiralées dans des couches adjacentes de l'article sont déposées respectivement par la tête de dépôt qui se déplace en spirale vers l'intérieur et en spirale vers l'extérieur entre des parties radialement vers l'extérieur et des parties radialement vers l'intérieur de l'article et/ou
dans lequel les instructions comportent des instructions de code G.

14. Appareil selon l'une quelconque des revendications d'appareil précédentes, dans lequel les instructions générées par l'au moins un processeur spécifient que la tête de dépôt dépose continûment un matériau selon une configuration transitoire (408, 414, 416) d'une position associée à une couche actuelle à une position située davantage vers l'extérieur dans le sens de la construction et qui est associée à une couche suivante, en particulier dans lequel les instructions générées par l'au moins un processeur spécifient que la configuration transitoire comporte une trajectoire hélicoïdale.

15. Support non transitoire lisible par ordinateur (1226) codé avec des instructions exécutables (106, 1228) qui, à leur exécution, amènent au moins un processeur (102, 1202) à exécuter un procédé de fabrication additive selon l'une quelconque des revendications de procédé précédentes.
